# EUROPEAN PATENT APPLICATION

(11) **EP 4 579 816 A1**
(43) Date of publication of application: **02.07.2025**
(21) Application number: 23870678.2
(22) Date of filing: 25.09.2023
(51) Int. Cl.: H01M 4/587, H01M 10/0525, C01B 32/21

(54) **GRAPHITE NEGATIVE ELECTRODE MATERIAL, PREPARATION METHOD THEREFOR AND APPLICATION THEREOF**

(30) Priority: 26.09.2022 CN 202211169275
(71) Applicant: Liyang Zichen New Materials Technology Co., Ltd, Changzhou, Jiangsu 213300 (CN)
(72) Inventor: JIANG, Zhao, hangzhou, Jiangsu 213300 (CN); LU, Yunfei, hangzhou, Jiangsu 213300 (CN); WANG, Biao, hangzhou, Jiangsu 213300 (CN); PAN, Jianyao, hangzhou, Jiangsu 213300 (CN); DING, Le, hangzhou, Jiangsu 213300 (CN); PANG, Wenwen, hangzhou, Jiangsu 213300 (CN); LIU, Dongren, hangzhou, Jiangsu 213300 (CN); LI, Hui, hangzhou, Jiangsu 213300 (CN)
(74) Representative: Buzzi, Notaro & Antonielli d'Oulx S.p.A.
(86) International application number: PCT/CN2023/120949
(87) International publication number: WO 2024/067447

(57) **Abstract**

A graphite negative electrode material, a preparation method therefor and an application thereof. The surface of the graphite negative electrode material is provided with a macroporous structure and a mesoporous structure. In the macroporous structure, the ratio R of depth H of the macropores to size D of the macropores satisfies 0 < R < 60, where R = H/D. In the mesoporous structure, the ratio r of depth h of the mesopores to size d of the mesopores satisfies 0 < r < 250, where r = h/d. The preparation method comprises: dispersing a pore-forming agent solution on the surface of graphite by means of a mechanical force, and carrying out heat treatment in a protective atmosphere to obtain the graphite negative electrode material. The pore-forming agent is water-soluble. The surface of the graphite negative electrode material is provided with a macroporous structure and a mesoporous structure at the same time. The hierarchical porous structure equips the base plane and the edge plane of the graphite material with channels capable of allowing lithium ions to quickly enter between graphite layers, and shorten the solid-phase diffusion path of lithium ions. Therefore, the charging rate of the graphite negative electrode material is improved, rapid charging is realized, the preparation process is safe and environment friendly, and the cost is low.

## Description

This application claims priority to Chinese Patent Application No. 202211169275.9 filed on September 26, 2022, the disclosure of which is incorporated herein by reference in its entirety.

### TECHNICAL FIELD

The present application belongs to the technical field of lithium-ion batteries, and relates to a graphite anode material, a preparation method therefor and use thereof.

### BACKGROUND

The rapid development of lithium-ion secondary batteries demands better fast charging performance of batteries in production and life. The anode material is an important part of lithium-ion secondary batteries, and the graphite anode material is the mainstream anode material currently. The rapid lithium intercalation performance of the graphite anode material largely determines the fast charging performance of lithium-ion secondary battery; thus, modifying graphite anode materials is an effective way to improve lithium intercalation behavior in graphite, which includes performing carbon coating, element doping, oxidative etching, pore forming, etc., on the graphite surface. For oxidative etching and pore forming, by react oxidizing gases or reagents with carbon through a certain chemical reaction to form pores on the surface of carbon/graphite materials, the diffusion paths of lithium ions from the graphite surface to the core are shorten, so as to improve the overall lithium intercalation performance of graphite materials.

Currently,, the following problems exist during the pore forming of graphite: (1) when nano-metal oxides or micro-metal oxides are used as pore-forming agents, the effective utilization rate is low due to uneven dispersion and loose contact with graphite, leading to the disadvantage of high cost; (2) when metal salts are used as pore-forming agents, a large amount of organic solvents are required for dissolving, and there are high energy consumption, low production efficiency, high production cost and large potential safety hazards during the evaporation and drying process of organic solvents; (3) when metal oxides or transition metal salts are used as pore-forming agents in the prior art, the pore-forming stage of heat treatment is usually carried out in oxygen or an oxygen-containing atmosphere, and there are potential safety hazards of dust explosion; and (4) after using metal oxides and metal salts as pore-forming agents to form pores in graphite materials, the pore-forming agents can only be removed by acid pickling or high-temperature graphitization, resulting in high production costs and potential safety and environmental pollution hazards.

For example, CN100499215A disclosed a surface-modified lithium-ion battery anode material, which is obtained by depositing metal salts on the surface of coke or artificial graphite micro powder, and then performing heat treatment on the micro powder in an oxidizing atmosphere, but the use of organic solvents in the preparation process leads to high production costs, and a large number of corrosive and harmful gases are produced in the heat treatment process. CN111048755A disclosed a high-rate lithium-ion battery anode material and a preparation method therefor; potassium carbonate and an organic substance containing nitrogen and phosphorus are prepared into a mixed solution, and then added to a hydrochloric acid solution, after being stirred evenly, added with flake graphite and mixed evenly to prepared a graphite mixed solution, and the graphite mixed solution is subjected to filtration, carbonization, and gas surface modification to obtain a graphite composite material. The nano- and micro-pores left by gas surface oxidation provide lithium ion intercalation channels, and improve the rate performance and cycling performance of the anode material. However, the depth of channels of the prepared material is limited, and the addition of hydrochloric acid solution and halogen gases are not friendly to metal equipment used in conventional industrial production and the environment. As another example, CN101908627A disclosed an anode material of lithium-ion secondary batteries and a preparation method therefor; mainly by adding an additive increasing graphitization degree and a pore-forming agent to the green coke after carbonization treatment, the prepared graphite anode material has a nano-porous structure, which can effectively improve the lithium insertion and extraction performance of the anode material and the liquid absorption performance of the electrode plate, but the poor uniformity of the pores prepared by the pore-forming agent affects the application of the material.

Therefore, how to achieve uniform pore formation on the surface of graphite, improve the electrochemical performance of graphite, and reduce costs and improve the safety of the preparation process at the same time, is a technical problem that needs to be solved urgently.

### SUMMARY

The following is a summary of subject matter that is described in detail herein. This summary is not intended to be limiting as to the scope of the claims.

A object of the present application is to provide a graphite anode material, a preparation method therefor and use thereof. The graphite anode material provided in the present application has a macroporous structure and a mesoporous structure on the surface simultaneously, and the hierarchical porous structure endows the basal plane and the edge plane of graphite with channels facilitating quick insertion of lithium ions into graphite interlayer, shortens the solid-phase diffusion path of lithium ions, thereby improving the charge rate of graphite anode material, realizing fast charging, and improving the fast charging performance, and the preparation process is safe and environmentally friendly with a low cost.

In order to achieve the object, technical solutions below are adopted in the present application.

In a first aspect, the present application provides a graphite anode material. The graphite anode material has a macroporous structure and a mesoporous structure on the surface, wherein in the macroporous structure, the ratio R of the depth H to the pore size D of macroporous pores satisfies 0 < R < 60, and R = H/D; and in the mesoporous structure, the ratio r of the depth h to the pore size d of mesoporous pores satisfies 0 < r < 250, and r = h/d.

For example, the R may be 0.5, 15, 10, 12, 15, 19, 20, 25, 30, 31, 35, 40, 45, 46, 49, 50, 55, or 59, etc., and the r may be 0.5, 1, 2, 3, 5, 8, 9, 10, 13, 15, 18, 20, 23, 25, 28, or 29, etc.

In the present application, the macropores are pores with a pore size greater than 50 nm, and mesopores are pores with a pore size range of 2-50 nm.

The graphite anode material provided in the present application has a macroporous structure and a mesoporous structure on the surface simultaneously, and the hierarchical porous structure endows the basal plane and the edge plane of graphite with channels facilitating quick insertion of lithium ions into graphite interlayer, shortens the solid-phase diffusion path of lithium ions, thereby improving the charge rate of graphite anode material, realizing fast charging, and improving the fast charging performance.

The graphite anode material provided in the present application differs from the conventional porous graphite anode material in that the surface of the porous graphite anode material has a uniform macroporous structure observed by a scanning electron microscope at a magnification of no more than 10000 times.

The depth of pores in the porous graphite provided in the present application is very significant compared with that of conventional porous graphite, and most of the pores are single-pore straight insertion. Therefore, compared with conventional porous graphite, the size and depth of pores of the porous graphite provided in the present application can be quantitatively measured.

The advantage lies in that the macroporous pores have a larger pore size and have high electrolyte retention capability and high electrolyte retention capacity; the deeper pore significantly shortens the solid-phase diffusion path of lithium ions between graphite layers, resulting in better rate performance.

In one embodiment, in the macroporous structure, a pore size of macroporous pores is less than 2 µm and a depth of macroporous pores is less than 3 µm. For example, the pore size of the macroporous pores may be 100 nm, 300 nm, 500 nm, 800 nm, 1 µm, 1.3 µm, 1.5 µm, 1.8 µm, or 1.9µm, etc., and the depth of the macroporous pores may be 500 nm, 800 nm, 1 µm, 1.3 µm, 1.5 µm, 1.8 µm, 2 µm, 2.3 µm, 2.5 µm, 2.8 µm, or 2.9 µm, etc.

In a second aspect, the present application provides a preparation method for the graphite anode material as described in the first aspect, and the preparation method includes the following steps:
dispersing a pore-forming agent solution on the surface of graphite through the action of mechanical force, and performing heat treatment under a protective atmosphere to obtain the graphite anode material;
wherein the pore-forming agent is water-soluble.

In the present application, there is no special limitation on the type of mechanical force, i.e., mechanical forces that can achieve the coating of the pore-forming agent are all applicable to the present application, including but not limited to shear force, friction force, etc.

The pore-forming agent solution can be uniformly coated on the surface of the graphite material through mechanical force by the preparation method provided in the present application, which reduces the usage amount of the pore-forming agent, and reduces the production cost; the production process is more friendly to equipment and environment; no oxidizing or halogen gas is added during the production process, reducing the risk; and the prepared material has more uniform distribution of pore structure, and is applicable to industrial production.

The product of the water-soluble pore-forming agent provided in the present application after heat treatment is still a water-soluble substance, that is, there is no substance produced which requires extra special treatment to be removed.

In one embodiment, a mass ratio of the pore-forming agent solution to the graphite is (0.1-1):1, for example, 0.1:1, 0.13:1, 0.15:1, 0.18:1, 0.2:1, 0.23:1, 0.25:1, 0.28:1, 0.3:1, 0.33:1, 0.35:1, 0.38:1, 0.4:1, 0.43:1, 0.45:1, 0.48:1, 0.5:1, 0.6:1, 0.7:1, 0.8:1, 0.9:1, or 1:1.

In one embodiment, a mass ratio of the pore-forming agent to the graphite is (0.05-0.5):1, for example, 0.05:1, 0.08:1, 0.1:1, 0.13:1, 0.15:1, 0.18:1, 0.2:1, 0.23:1, 0.25:1, 0.28:1, 0.3:1, 0.33:1, 0.35:1, 0.38:1, 0.4:1, 0.43:1, 0.45:1, 0.48:1, or 0.5:1.

In the present application, an overly large mass ratio of the pore-forming agent to the graphite, i.e., an excessive additive amount of the pore-forming agent, will be adverse to the formation of uniformly distributed pore structure, and an overly small mass ratio will lead to the difficulty of forming a macroporous structure or the inability to form a uniformly distributed pore structure on the surface of the graphite material.

From the range of the mass ratio of the pore-forming agent to the graphite provided in the present application, it can be seen that a very small amount of the pore-forming agent is used in the present application to realize the pore formation of the graphite material, without the need to use a large amount of the pore-forming agent, and there is no need to repeatedly soak the graphite material into the pore-forming agent solution. That is, by using the method of mechanical force in the present application, it is realized that only a very small amount of pore-forming agent is used to produce a hierarchical porous structure on the surface of the graphite anode material with uniformly distributed pores, reducing the production cost greatly.

In one embodiment, the heat treatment is performed at a temperature of 700-900°C, for example, 700°C, 730°C, 750°C, 780°C, 800°C, 830°C, 850°C, 880°C, or 900°C.

The temperature of heat treatment provided in the present application will, if too large, cause the specific surface area of the graphite material to be too large; if the temperature of heat treatment is too small, there will be difficulty in forming pores on the surface of the graphite material.

In one embodiment, a substance obtained after the heat treatment is subjected to water washing and drying in sequence.

In the present application, the by-products and other impurities produced by the pore-forming agent can be removed by impurity removal of simple water washing, rather than complex acid pickling or other additional treatment processes.

In one embodiment, the water-soluble pore-forming agent includes any one or a combination of at least two of an inorganic base, a carbonate salt, a chloride salt, or an inorganic acid.

In one embodiment, the inorganic base includes NaOH and/or KOH, the carbonate salt includes Na₂CO₃ and/or K₂CO₃, the chloride salt includes KCl and/or ZnCl₂, and the inorganic acid includes H₃PO₄.

The by-products or impurities produced by the pore-forming agent provided in the present application after heat treatment are still water-soluble substances, and no additional impurity that is difficult to remove is generated.

In one embodiment, a solvent of the pore-forming agent solution is water, and the pore-forming agent solution further includes a dispersant.

In the present application, the pore-forming agent is water-soluble, which will not cause overly small pore sizes due to carbonization during the heat treatment process.

In the present application, the addition of the dispersant can better realize the uniform distribution and tight adhesion of the pore-forming agent on the surface of the graphite.

In one embodiment, the dispersant includes any one or a combination of at least two of PVP, PVA, or CMC.

In a third aspect, a lithium-ion battery is further provided in the present application, and the lithium-ion battery includes the graphite anode material as described in the first aspect.

Compared with the prior art, the present application has the following beneficial effects.
(1) The graphite anode material provided in the present application has a macroporous structure and a mesoporous structure on the surface simultaneously, and the hierarchical porous structure endows the basal plane and the edge plane of graphite with channels facilitating quick insertion of lithium ions into graphite interlayer, and shortens the solid-phase diffusion path of lithium ions, thereby improving the charge rate of graphite anode material, realizing fast charging, and improving the fast charging performance. The graphite material with hierarchical porous structure provided in the present application is made by adding the dispersant in the preparation process, and also carrying out the subsequent water washing treatment, and combined with the regulation of heat treatment temperature (700-900°C), so that the obtained graphite anode material has a hierarchical porous structure of macroporous pores and mesoporous pores. In the present application, the delithiation capacity of the battery can be more than 359.7 mAh/g, the initial Coulombic efficiency under 0.1 C can reach more than 93.8%, and the rate performance of 2 C/0.2 C can reach 72% or more.
(2) The pore-forming agent solution can be uniformly coated on the surface of the graphite material through mechanical force by the preparation method provided in the present application, which reduces the usage amount of the pore-forming agent, and reduces the production cost; the production process is more friendly to equipment and environment; no oxidizing or halogen gas is added in the production process, reducing the risk; and the prepared material has more uniform distribution of pore structure, and is applicable to industrial production.

Other aspects will be appreciated upon reading and understanding the drawings and detailed description.

### BRIEF DESCRIPTION OF DRAWINGS

The drawings are used to provide a further understanding of the technical solution herein and form part of the description, and are used together with the embodiments of the present application to interpret the technical solution herein, and do not constitute a limitation on the technical solution herein.
Fig. 1 is an SEM image of the graphite anode material provided in Example 2.
Fig. 2 is an SEM image of the graphite anode material provided in Example 2.
Fig. 3 is an SEM image of the graphite anode material provided in Example 7.
Fig. 4 is a TEM image of the graphite anode material provided in Example 7.

### DETAILED DESCRIPTION

The technical solutions of the present application are further described below in terms of specific embodiments. It should be clear to those skilled in the art that the embodiments are merely used for a better understanding of the present application and should not be regarded as a specific limitation to the present application.

### Example 1

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) KOH, water and PVP were fully dissolved according to the mass ratio of 5:5:0.5 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 0.5:1 (the mass ratio of the pore-forming agent KOH to graphite powder was 0.24:1); and
(3) the mixture B was heated to 900°C at 1°C/min in a nitrogen atmosphere in a carbonization furnace, kept at the temperature for 6 h, and then cooled to room temperature to obtain a carbonized material C, and the carbonized material C was washed by water and filtered several times to neutral and then dried at 150°C for 1 h, so as to obtain the graphite anode material.

### Example 2

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) KOH, water and PVA were fully dissolved according to the mass ratio of 5:5:0.5 to obtain a solution A;
(2) graphite powder with a particle size DV50 of 10 µm was coated with the solution A on the surface through the action of friction force, and dried at 150°C for 2 h to obtain a mixture B, and the mass ratio of the solution A to graphite powder was 0.5:1; and
(3) the mixture B was heated to 900°C at 1°C/min in a nitrogen atmosphere in a carbonization furnace, kept at the temperature for 1 h, and then cooled to room temperature to obtain a carbonized material C, and the carbonized material C was washed by water and filtered several times to neutral and then dried at 150°C for 1 h, so as to obtain the graphite anode material.

### Example 3

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) KOH, water and PVA were fully dissolved according to the mass ratio of 5:5:0.5 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 0.1:1 (the mass ratio of the pore-forming agent KOH to graphite powder was 0.05:1); and
(3) the mixture B was heated to 900°C at 1°C/min in a nitrogen atmosphere in a carbonization furnace, kept at the temperature for 1 h, and then cooled to room temperature to obtain a carbonized material C, and the carbonized material C was washed by water and filtered several times to neutral and then dried at 150°C for 1 h, so as to obtain the graphite anode material.

### Example 4

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) K₂CO₃, water and CMC were fully dissolved according to the mass ratio of 5:5:0.1 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 0.5:1; and
(3) the mixture B was heated to 900°C at 1°C/min in a nitrogen atmosphere in a carbonization furnace, kept at the temperature for 6 h, and then cooled to room temperature to obtain a carbonized material C, and the carbonized material C was washed by water and filtered several times to neutral and then dried at 150°C for 1 h, so as to obtain the graphite anode material.

### Example 5

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) K₂CO₃, water and CMC were fully dissolved according to the mass ratio of 5:5:0.1 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 0.5:1; and
(3) the mixture B was heated to 700°C at 1°C/min in a nitrogen atmosphere in a carbonization furnace, kept at the temperature for 6 h, and then cooled to room temperature to obtain a carbonized material C, and the carbonized material C was washed by water and filtered several times to neutral and then dried at 150°C for 1 h, so as to obtain the graphite anode material.

### Example 6

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) ZnCl₂, water and CMC were fully dissolved according to the mass ratio of 5:5:0.1 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 1:1 (the mass ratio of the pore-forming agent ZnCl₂ to graphite powder was 0.5:1); and
(3) the mixture B was heated to 700°C at 1°C/min in a nitrogen atmosphere in a carbonization furnace, kept at the temperature for 6 h, and then cooled to room temperature to obtain a carbonized material C, and the carbonized material C was washed by water and filtered several times to neutral and then dried at 150°C for 1 h, so as to obtain the graphite anode material.

### Example 7

This example provides a graphite anode material, which has a macroporous structure and a mesoporous structure on the surface; in the macroporous structure, the ratio R of the depth H to the pore size D of macroporous pores is represented as R = H/D; in the mesoporous structure, the ratio r of the depth h to the pore size d of mesoporous pores is represented as r = h/d. R and r are both shown in Table 1.

The preparation method of the graphite anode material is as follows:
(1) NaOH, water and CMC were fully dissolved according to the mass ratio of 1:5:0.1 to obtain a solution A;
(2) graphite powder with a particle size DV50 of 10 µm was coated with the solution A on the surface through the action of shear force, and dried at 150°C for 2 h to obtain a mixture B, and the mass ratio of the solution A to graphite powder was 1:1; and
(3) the mixture B was heated to 700°C at 1°C/min in a nitrogen atmosphere in a carbonization furnace, kept at the temperature for 6 h, and then cooled to room temperature to obtain a carbonized material C, and the carbonized material C was washed by water and filtered several times to neutral and then dried at 150°C for 1 h, so as to obtain the graphite anode material.

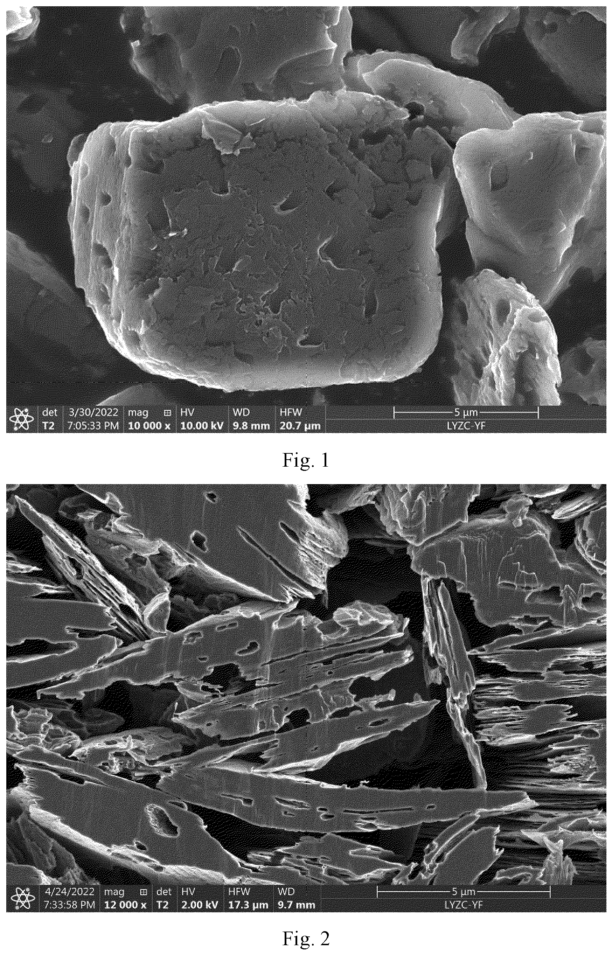

Fig. 1 shows an SEM image of the graphite anode material provided in Example 2 at 10000 times magnification. It can be seen from Fig. 1 that the surface of the graphite particles has pits lower than the graphite surface, that is, the pore structure, the macropores are uniformly distributed on the graphite surface, and the mesopores can be observed among the macropores; the pore size can be accurately measured via this image. Fig. 2 shows an SEM image of the section of the graphite anode material provided in Example 2, it can be seen that the pores on the surface of the graphite particles extend to the graphite core by a certain depth, thereby the depth of the pore can be quantitatively measured by this method, and the depth of the macropores of the graphite anode material is up to 3 µm.

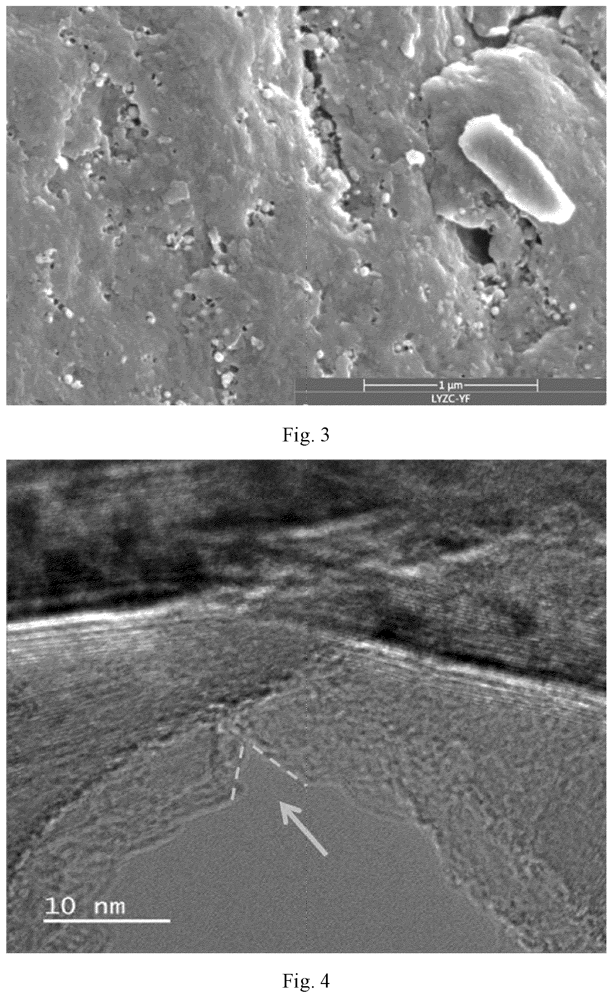

Fig. 3 shows an SEM image of the graphite anode material provided in Example 7, and it can be seen from Fig. 3 that the surface of the graphite particles is evenly distributed with mesopores and macropores with small pore sizes.

Fig. 4 shows a TEM image of the graphite anode material provided in Example 7, and it can be seen from Fig. 4 that the pores on the surface of the graphite particles extend to the graphite core by a certain depth, thus the pore sizes and depths of pores with small sizes that are inconvenient to be observed by SEM can be quantitatively measured by this method, and the pores in this image are mesopores.

### Example 8

This example is different from Example 1 in that PVP was not added in step (1) of this example.

The rest of the preparation method and parameters were consistent with those of Example 1.

### Example 9

This example is different from Example 1 in that water washing was not performed in step (2) of this example.

The rest of the preparation method and parameters were consistent with those of Example 1.

### Example 10

This example is different from Example 1 in that the heat treatment was performed at a temperature of 650°C in step (3) of this example.

The rest of the preparation method and parameters were consistent with those of Example 1.

### Comparative Example 1

This example is different from Example 1 in that KOH was not added in this example.

The rest of the preparation method and parameters were consistent with those of Example 1.

### Comparative Example 2

This comparative example provides a preparation method for a graphite anode material, and the preparation method is as follows:
(1) Pore-forming agent iron oxide with a particle size DV50 of 0.5 µm was mixed with graphite powder with a particle size DV50 of 10 µm to obtain a mixture A, and the mass ratio of iron oxide to graphite was 0.24: 1; and
(2) the mixture A was heated to 900°C at 1°C/min in a nitrogen atmosphere in a carbonization furnace, kept at the temperature for 1 h, and then cooled to room temperature to obtain a carbonized material B, and the carbonized material B was washed by water and filtered several times and then dried at 150°C for 1 h, so as to obtain the graphite anode material.

The graphite anode materials provided in Examples 1-10 and Comparative Examples 1-2 were tested, and the tests included:
(1) the specific surface area of the graphite anode material was measured by N₂ adsorption method;
(2) the graphite anode material was observed by a scanning electron microscope, and the sizes and areas of the macropores were measured;
(3) the graphite anode material was subjected to sample preparation by argon ion beam cutting and polishing, and observed by a scanning electron microscope to statistically obtain data on the ratio of pore depth to pore size;
(4) the mesopore size of the graphite anode material was observed by using a transmission electron microscope to statistically obtain data on the ratio of pore depth to pore size; and
(5) electrochemical performance test: the graphite anode materials provided by Examples 1-10 and Comparative Examples 1-2 were prepared into a slurry according to graphite:CMC:SP:SBR = 93.5:1.5:2:3, and the slurry was subjected to coating, drying and rolling to obtain a negative electrode, and then prepared into a CR2430-type button half-cell, and the counter electrode was a metal lithium plate. The capacity, initial Coulombic efficiency and rate performance of the graphite anode materials were tested.

The button half-cell was discharged to 0.005 V at 0.1 C, allowed to stand for 10 min, discharged to 0.005 V at 0.01 C, allowed to stand for 10 min, and then charged to 2 V at 0.1 C; the operation was ended, so as to obtain the lithiation capacity and delithiation capacity, and the initial Coulombic efficiency refers to the ratio of the delithiation capacity to the lithiation capacity. The button half-cell was discharged to 0.01 V at 0.2 C, discharged to 0.01 C at a constant voltage of 0.01 V, and allowed to stand for 10 s; and charged to 1.5 V at 0.2 C, allowed to stand for 10 s, discharged to 0.01V at 2 C, discharged to 0.01C at a constant voltage of 0.01 V, and charged to 1.5 V at 2 C, to obtain lithiation capacities under the conditions of 0.2 C and 2 C, respectively.

The results of the above tests are shown in Table 1.

**Table 1**

| | Specific surface area (m²/g) | Proportion of area of pores on the surface of graphite | Macropore R | Mesopore r | Delithiation capacity (mAh/g) | Initial Coulom bic efficien cy (%) | 2C/0.2 C (%) |
|---|---|---|---|---|---|---|---|
| Example 1 | 6.22 | 51% | 46 | 7 | 359.7 | 93.9 | 90 |
| Example 2 | 5.20 | 45% | 40 | 6 | 360.2 | 94.2 | 85 |
| Example 3 | 3.12 | 12% | 12 | 2 | 360.5 | 94.3 | 76 |
| Example 4 | 6.35 | 55% | 49 | 9 | 360.5 | 93.8 | 91 |
| Example 5 | 3.45 | 16% | 19 | 3 | 360.7 | 94.2 | 78 |
| Example 6 | 3.68 | 19% | 22 | 3 | 360.3 | 94.3 | 79 |
| Example 7 | 3.01 | 7% | 8 | 2 | 360.8 | 94.3 | 72 |
| Example 8 | 2.71 | 3% | 5 | 1 | 359.8 | 94.0 | 71 |
| Example 9 | 2.61 | 4% | 3 | 1 | 351.1 | 87.6 | 68 |
| Example 10 | 2.15 | No obvious pores observed | / | / | 359.1 | 94.1 | 61 |
| Comparative Example 1 | 2.08 | No obvious pores observed | / | / | 358.2 | 94.1 | 59 |
| Comparative Example 2 | 3.27 | 22% | / | / | 340.2 | 93.5 | 68 |

From the data of Examples 1-7, it can be seen that with the proportion of the pore-forming agent increasing, the macropore R, small pore r, proportion of area of pores on the surface and BET of the prepared porous graphite anode material all increase significantly, and the kinetic performance improves significantly.

It can be seen from the data of Examples 1 and 8 that not adding a dispersant to the pore-forming agent solution is not conducive to the uniform distribution of the pores, reduces the proportion of pore area on the surface of graphite, and reduces the ratios R and r.

It can be seen from the data of Examples 1 and 9 that without water washing treatment, the capacity and initial Coulombic efficiency will significantly decrease because the pore-forming agent and by-products thereof are not removed.

It can be seen from the data of Examples 1 and 10 that an overly low temperature of heat treatment will lead to difficulty in forming pores.

It can be seen from the data of Example 1 and Comparative Example 1 that without a pore-forming agent, pore formation cannot be realized, and the specific surface area of the material is small, and the kinetic performance, especially the fast charging performance, is obviously very poor.

It can be seen from the data of Example 1 and Comparative Example 2 that the conventional pore-forming method has defects such as uneven distribution of pore-forming agent on the surface of graphite particles, which results in local accumulation of the pore, and harsh conditions of pore-forming atmosphere, finally leading to weak pore-forming ability and poor pore uniformity, which is specifically manifested as the formation of aggregated macropores and union macropores retaining a plurality of pore contours; the pore size can be greater than 4 µm; due to uneven distribution of pores and insufficient depth of pores, for the electrochemical performance, the rate performance is poor; in addition, iron oxide is reduced to iron; because the iron cannot be removed by water washing, and cannot be intercalated with lithium ions, the test capacity is low.

In summary, the graphite anode material provided in the present application has a macroporous structure and a mesoporous structure on the surface simultaneously, and the hierarchical porous structure endows the basal plane and the edge plane of graphite with channels facilitating quick insertion of lithium ions into graphite interlayer, and shortens the solid-phase diffusion path of lithium ions, thereby improving the charge rate of the graphite anode material, realizing fast charging, and improving the fast charging performance, and the preparation process is simple and has high safety and low cost, which is suitable for industrial production. The graphite material with hierarchical porous structure provided in the present application is made by adding the dispersant in the preparation process, and also carrying out the subsequent water washing treatment, and combined with the regulation of heat treatment temperature (700-900°C), so that the obtained graphite anode material has a hierarchical porous structure of macroporous pores and mesoporous pores. In the present application, the delithiation capacity of the battery can be 359.7 mAh/g or more, the initial Coulombic efficiency under 0.1 C can reach 93.8% or more, and the rate performance of 2 C/0.2 C can reach 72% or more.

The applicant declares that the aforementioned are only specific embodiments of the present application, but the protection scope of the present application is not limited to the above embodiments. Those skilled in the art should understand that any change or replacement that can be easily conceived within the scope of the technology disclosed in the present application by a person skilled in the art shall fall within the protection scope and disclosure scope of the present application.

## Claims

1. A graphite anode material, which has a macroporous structure and a mesoporous structure on the surface, wherein in the macroporous structure, a ratio R of depth H to pore size D of macroporous pores satisfies 0 < R < 60, and R = H/D; and in the mesoporous structure, a ratio r of depth h to pore size d of mesoporous pores satisfies 0 < r < 250, and r = h/d.

2. The graphite anode material according to claim 1, wherein in the macroporous structure, the ratio R of the depth H to the pore size D of macroporous pores satisfies 0.5 ≤ R < 60, optionally, 3 ≤ R ≤ 49, more optionally, 8 ≤ R ≤ 49, and further optionally, 40 ≤ R ≤ 49;
and/or, in the mesoporous structure, the ratio r of the depth h to the pore size d of mesoporous pores satisfies 0.5 ≤ r < 250, optionally, 0.5 ≤ r ≤ 29, more optionally, 1 ≤ r ≤ 9, further optionally, 2 ≤ r ≤ 9, and specifically optionally, 6 ≤ r ≤ 9;
and/or, for a lithium-ion battery obtained by the graphite anode material, a rate performance of 2 C/0.2 C is 72% or more; optionally, the rate performance of 2 C/0.2 C is 85-91%.

3. The graphite anode material according to claim 1 or 2, wherein the macroporous structure and the mesoporous structure endow the basal plane and the edge plane of graphite with channels facilitating quick insertion of lithium ions into graphite interlayer.

4. The graphite anode material according to any one of claims 1-3, wherein the macroporous structure comprises a pore structure of single-pore straight insertion, and the mesoporous structure comprises a pore structure of single-pore straight insertion.

5. The graphite anode material according to any one of claims 1-4, wherein the surface of the graphite anode material has a uniform macroporous structure observed by a scanning electron microscope at a magnification of no more than 10000 times;
and/or, the mesoporous pores are distributed among the macroporous pores.

6. The graphite anode material according to any one of claims 1-5, wherein in the macroporous structure, the pore size of macroporous pores is less than 2 µm and the depth of macroporous pores is less than 3 µm;
optionally, in the macroporous structure, the pore size D of macroporous pores satisfies 50 nm < D < 2 µm, further optionally, 100 nm ≤ D < 2 µm;
optionally, in the macroporous structure, the depth H of macroporous pores satisfies 500 nm < H< 3 µm, further optionally, 500 nm ≤ H ≤ 2.9 µm.

7. A preparation method for the graphite anode material according to any one of claims 1-6, which comprises the following steps:
dispersing a pore-forming agent solution on the surface of graphite through the action of mechanical force, and performing heat treatment under a protective atmosphere to obtain the graphite anode material;
wherein the pore-forming agent is water-soluble.

8. The preparation method for the graphite anode material according to claim 7, wherein a mass ratio of the pore-forming agent solution to the graphite is (0.1-1):1; a mass ratio of the pore-forming agent to the graphite is (0.05-0.5):1;
and/or, the heat treatment is performed at a temperature of 700-900°C;
and/or, a substance obtained after the heat treatment is subjected to water washing and drying in sequence;
and/or, the water-soluble pore-forming agent comprises any one or a combination of at least two of an inorganic base, a carbonate salt, a chloride salt, or an inorganic acid;
optionally, the inorganic base comprises NaOH and/or KOH, the carbonate salt comprises Na₂CO₃ and/or K₂CO₃, the chloride salt comprises KCl and/or ZnCl₂, and the inorganic acid comprises H₃PO₄;
optionally, the water-soluble pore-forming agent comprises KOH, K₂CO₃, ZnCl₂ or NaOH.

9. The preparation method for the graphite anode material according to claim 7 or 8, wherein a solvent of the pore-forming agent solution is water, and the pore-forming agent solution further comprises a dispersant.

10. A lithium-ion battery, which comprises the graphite anode material according to any one of claims 1-6.
